# FASCICULE DE BREVET EUROPEEN

(11) **EP 2 716 343 B1**
(45) Date de publication et mention de la délivrance du brevet: **10.05.2017**
(21) Numéro de dépôt: 13186915.8
(22) Date de dépôt: 01.10.2013
(51) Int. Cl.: B01D 29/27, A01J 25/11, B01D 29/70, B01D 41/04

(54) **Dispositif de retournement de poche de filtration**
Rückführvorrichtung einer Filtertasche
Device for turning out a filter bag

(30) Priorité: 03.10.2012 FR 1259360
(43) Date de publication de la demande: 09.04.2014
(73) Titulaire: Equipements Techniques Des Industries Alimentaires Et Connexes - Tecnal, 79000 Niort (FR)
(72) Inventeur: Villard, Jérôme, 79000 NIORT (FR)
(74) Mandataire: Gaillarde, Frédéric F. Ch.

(56) Documents cités:
- AT-B- 376 140
- DE-A1- 2 727 477
- DE-B- 1 019 121
- DE-B- 1 031 105
- FR-A1- 2 935 226

## Description

La présente invention se rapporte à la fabrication de caillé de lait. Elle s'applique au domaine de l'agro-alimentaire et plus particulièrement au domaine de l'industrie laitière et fromagère.

Le caillé est un produit de base utilisé pour la fabrication de fromages, fromages blancs et de nombreuses autres spécialités laitières et fromagères.

Il s'agit d'un produit solide issu du lait et obtenu par précipitation de ses caséines sous l'effet d'une substance acide, en général de la présure.

La partie liquide restant est le lacto-sérum (couramment appelé petit-lait)

Avant utilisation et traitement, le caillé doit donc être séparé du petit-lait.

En fonction de l'emploi ultérieur du caillé, on pourra souhaiter conserver plus ou moins de petit-lait et obtenir un caillé plus ou moins sec.

Un caillé destiné à la fabrication de bûches de chèvre, par exemple, devra être relativement sec. En revanche, un caillé destiné à la fabrication de fromage blanc sera nettement plus humide.

La séparation du caillé et du petit-lait est classiquement effectuée par filtration à travers des poches ou toiles filtrantes en tissu, la partie liquide traverse la poche et est éliminée ou récupérée pour d'autres applications, tandis que le caillé est retenu à l'intérieur de la poche.

Régulièrement la poche de filtration est vidée et le caillé récupéré.

Afin de limiter les pertes de matière et optimiser le rendement, la poche doit être soigneusement raclée et essorée.

Dans le cas de caillé pour fromage blanc, le caillé obtenu étant relativement humide, la poche est généralement manuellement retournée avant essorage, également manuel, de ladite poche.

Dans le cas d'un caillé pour fromage, plus sec, la poche est manuellement retournée puis grattée avec un couteau de raclage.

On comprend que les opérations de retournement de la poche puis d'essorage et de raclage sont des opérations délicates qui demandent un temps de manipulation important.

En outre les produits sont manipulés par des opérateurs, ce qu'il est généralement souhaitable de limiter dans l'industrie agro-alimentaire et ce malgré toutes les précautions d'hygiène prises.

Ces opérations sont de plus pénibles et le poste de travail correspondant est peu ergonomique.

On connait du document AT 376 140 un dispositif de filtration automatique.

La présente invention vise à résoudre ce problème et propose pour ce faire un dispositif de retournement d'une poche de filtration comprenant au moins un moyen de suspension et d'écartement de la poche au niveau d'une ouverture de cette dernière, caractérisé en ce que le moyen de suspension est monté mobile entre une position initiale dans laquelle il présente une face supérieure orientée vers l'extérieur de la poche et une face inférieure orientée vers l'intérieur de la poche, et une position finale retournée dans laquelle, la face supérieure devient la face inférieure et réciproquement, ledit moyen de suspension étant par ailleurs associé, lors du passage de sa position initiale à sa position retournée, à au moins un moyen de guidage de la poche définissant une trajectoire au cours de laquelle la poche se trouve surélevée par rapport au moyen de suspension et son ouverture, provoquant ainsi sa chute à travers l'ouverture et par voie de conséquence son retournement, la surface supérieure du moyen de suspension orientée vers l'extérieur de la poche devenant la surface inférieure orientée vers l'intérieure de la poche.

Ainsi grâce au moyen de guidage accompagnant le fond de la poche pendant le retournement de l'ouverture de cette dernière, le fond de poche se retrouve en position finale au-dessus de l'ouverture. Le poids de la poche chargée du caillé restant et la gravité fait que le fond de la poche tombe à travers l'ouverture retournée, ce qui induit le retournement complet de la poche et la libération du caillé restant. Une cuve de récupération sera disposée sensiblement au niveau de la position d'arrivée.

Avantageusement, le moyen de suspension est monté mobile par l'intermédiaire d'au moins un bras support mobile en rotation autour d'un axe sensiblement transversal audit bras.

De manière préférentielle, le moyen de suspension décrit une trajectoire sensiblement semi-circulaire.

Selon un mode de réalisation préféré, le moyen de suspension comprend au moins deux barres de suspension sensiblement parallèles et écartées entre elles de manière à maintenir la poche ouverte.

Préférentiellement, les barres de suspension s'étendent selon une direction sensiblement transversale à la trajectoire du moyen de suspension.

De manière préférentielle, le moyen de guidage est réalisé à partir d'un dôme s'étendant sensiblement le long de la trajectoire du moyen de suspension.

Préférentiellement encore, le dôme est de forme sensiblement hémi-cylindrique.

De manière avantageuse, la trajectoire du moyen de suspension et celle décrite par le moyen de guidage associé sont réversibles, la position finale devenant la position initiale d'une nouvelle poche et réciproquement. Ainsi, lorsqu'une poche de filtration a atteint la position finale et été nettoyée, une nouvelle poche peut être accrochée au moyen de suspension.

De manière avantageusement complémentaire, le dispositif est équipé d'un système de raclage, en particulier un ou deux couteaux, montés mobile de manière à venir serrer la poche et racler la poche sur la longueur depuis son ouverture vers un fond de la poche, après retournement de cette dernière.

Selon une variante de réalisation, le moyen de suspension est déplacé au moins partiellement à l'aide de bras robotisés.

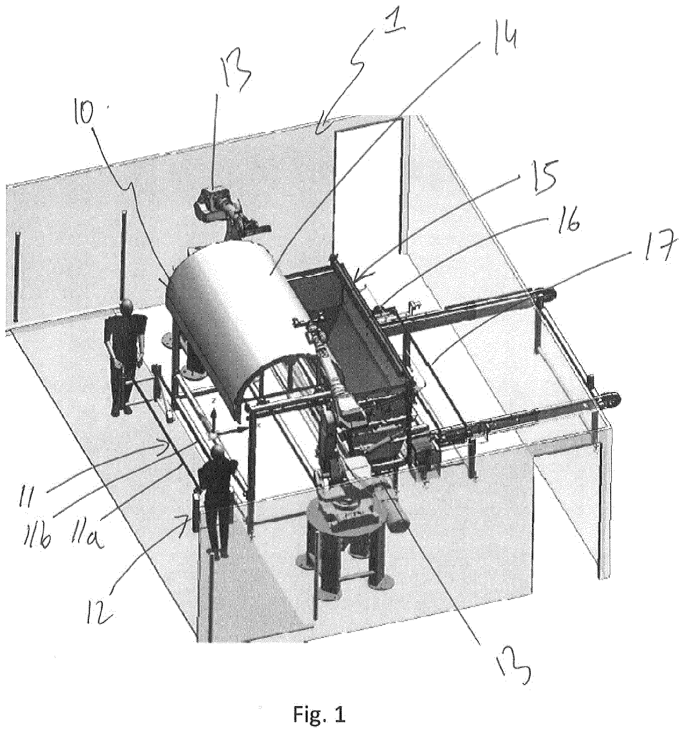

La présente invention sera mieux comprise à la lumière de la description qui suit en regard du dessin annexé dans lequel la figure unique montre une installation d'un dispositif de retournement de poche de filtration selon l'invention.

L'installation 1 comprend un dispositif de retournement 10 selon l'invention.

Le dispositif de retournement 10 comprend un moyen d'accrochage et de suspension 11 de la poche à retourner, se présentant sous la forme d'un cadre comprenant deux barres 11 a, 11 b longitudinales sensiblement parallèles entre elles et espacées.

L'espacement des barres 11 a, 11 b permet de maintenir la poche écartée et ouverte une fois accrochée.

Le cadre 11 est mobile et repose initialement sur un socle 12.

Afin de déplacer le cadre 11, le dispositif comprend deux bras robotisés 13 aptes à venir saisir le cadre 11 au niveau d'une de ses extrémités et à le déplacement depuis sa position initiale vers une position finale.

Au cours de ce déplacement le cadre 11 est retourné par les bras 13 de manière à ce que la face supérieure du cadre 11 (orientée vers l'extérieur de la poche) se retrouve orientée vers le dessous et que la face inférieure (orientée vers l'intérieur de la poche) se retrouve par conséquence orientée vers le dessus.

Le passage du cadre 11 de sa position initiale vers sa position finale s'effectue au dessus d'un moyen de guidage se présentant sous la forme d'un dôme 14 sensiblement hémi-cylindrique et orienté parallèlement aux barres 11 a, 11 b du cadre 11.

Au cours de son déplacement, le cadre 11 suit sensiblement la courbure du dôme 14.

Il s'ensuit que lorsque le cadre 11 commence à redescendre le long du dôme vers sa position finale, le reste de la poche, tirée par le cadre 11 se retrouve au dessus du dit cadre 11.

Arrivée en position finale, de l'autre côté du dôme 14, l'inclinaison du dôme est suffisante pour provoquer la chute du reste de la poche à travers le cadre 11 et l'ouverture de la dite poche, ce qui entraîne son retournement (détroussage).

La surface supérieure du cadre 11 initialement orientée vers l'extérieur de la poche devient alors la surface inférieure orientée vers l'intérieur de la poche.

La position d'arrivée du cadre 11 est située au dessus d'un bac de récupération 15 destiné à récupérer le contenu de la poche retournée. Ce bac de récupération 15 est associé à une goulotte équipée d'une pompe qui permet de transférer le produit (caillé) récupéré vers des postes de traitement subséquents.

A titre complémentaire, et afin d'assurer une récupération optimale de la matière de la poche, le bac de récupération est équipé de couteaux de raclage 16 montés mobiles de manière à venir serrer la poche retournée sensiblement au niveau de l'ouverture.

Les bras robotisés 13 déplacent alors verticalement la poche de manière à ce que les couteaux 16 raclent cette dernière sur toute sa longueur.

La poche ainsi nettoyée est ensuite disposée par les bras 13 sur un convoyeur 17 d'évacuation où elles sont récupérées par un opérateur, notamment pour être lavées.

L'utilisation de bras robotisés 13 permet une manipulation aisée du cadre 11 et plusieurs mouvements de la poche avec les mêmes bras 13.

D'autres solutions sont bien évidemment possibles. Il est notamment possibles de monter le cadre 11 à l'extrémité de bras monté en rotation sur un axe sensiblement sensiblement transversal audit bras et plus particulièrement autour de l'axe central du dôme 14.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif (10) de retournement d'une poche de filtration comprenant au moins un moyen de suspension et d'écartement (11) de la poche au niveau d'une ouverture de cette dernière, **caractérisé en ce que** le moyen de suspension est monté mobile entre une position initiale dans laquelle il présente une face supérieure orientée vers l'extérieur de la poche et une face inférieure orientée vers l'intérieur de la poche, et une position finale retournée dans laquelle, la face supérieure devient la face inférieure et réciproquement, ledit moyen de suspension étant par ailleurs associé, lors du passage de sa position initiale à sa position retournée, à au moins un moyen de guidage (14) de la poche définissant une trajectoire au cours de laquelle la poche se trouve surélevée par rapport au moyen de suspension et son ouverture, provoquant ainsi sa chute à travers l'ouverture et par voie de conséquence son retournement, la surface supérieure du moyen de suspension orientée vers l'extérieur de la poche devenant la surface inférieure orientée vers l'intérieur de la poche.

2. Dispositif (10) selon la revendication 1, **caractérisé en ce que** le moyen de suspension (11) est monté mobile par l'intermédiaire d'au moins un bras support mobile en rotation autour d'un axe sensiblement transversal audit bras.

3. Dispositif (10) selon l'une quelconque des revendications 1 ou 2, **caractérisé en ce que** le moyen de suspension (11) décrit une trajectoire sensiblement semi-circulaire.

4. Dispositif (10) selon l'une quelconque des revendications 1 à 3, **caractérisé en ce que** le moyen de suspension (11) comprend au moins deux barres de suspension (11 a, 11 b) sensiblement parallèles et écartées entre elles de manière à maintenir la poche ouverte.

5. Dispositif (10) selon la revendication 4, **caractérisé en ce que** les barres de suspension (11a, 11 b) s'étendent selon une direction sensiblement transversale à la trajectoire du moyen de suspension (11).

6. Dispositif (10) selon l'une quelconque des revendications 1 à 5, **caractérisé en ce que** le moyen de guidage est réalisé à partir d'un dôme (14) s'étendant sensiblement le long de la trajectoire du moyen de suspension (11).

7. Dispositif (10) selon la revendication 6, **caractérisé en ce que** le dôme (14) est de forme sensiblement hémi-cylindrique.

8. Dispositif (10) selon l'une quelconque des revendications 1 à 7, **caractérisé en ce que** la trajectoire du moyen de suspension (11) et celle décrite par le moyen de guidage (14) associé sont réversibles, la position finale devenant la position initiale d'une nouvelle poche et réciproquement.

9. Dispositif (10) selon l'une quelconque des revendications 1 à 8, **caractérisé en ce qu'**il est équipé d'un système de raclage, en particulier un ou deux couteaux (16), montés mobile de manière à venir serrer la poche et racler la poche sur la longueur depuis son ouverture vers un fond de la poche, après retournement de cette dernière.

10. Dispositif (10) selon l'une quelconque des revendications 1 à 9, **caractérisé en ce que** le moyen de suspension (11)est déplacé au moins partiellement à l'aide de bras robotisés (13).

## Patentansprüche

1. Vorrichtung (10) zum Wenden eines Filterbeutels, zumindest ein Mittel zum Aufhängen und Auseinanderziehen (11) des Beutels im Bereich einer Öffnung von letzterem umfassend, **dadurch gekennzeichnet, dass** das Mittel zum Aufhängen mobil zwischen einer Grundposition, in der es eine Oberseite aufweist, die zur Außenseite des Beutels weist, und eine Unterseite, die ins Innere des Beutels weist, und einer endgültigen Wendeposition montiert ist, in der Oberseite zur Unterseite wird, und umgekehrt, wobei das besagte Mittel zum Aufhängen darüber hinaus beim Übergang von seiner Grundposition in seine Wendeposition zumindest einem Führungsmittel (14) des Beutels zugeordnet ist, welches einen Bahnverlauf definiert, im Laufe dessen sich der Beutel im Verhältnis zum Mittel zum Aufhängen und seiner Öffnung in erhöhter Lage befindet, was zu seinem Fall durch die Öffnung hindurch, und folglich zu seiner Wende führt, wobei die obere Fläche des Mittels zum Aufhängen, die die zur Außenseite des Beutels weist, zur unteren Fläche wird, die die ins Innere des Beutels weist.

2. Vorrichtung (10) nach Anspruch 1, **dadurch gekennzeichnet, dass** das Mittel zum Aufhängen (11) über zumindest einen Stützarm mobil montiert ist, der um eine im Wesentlichen quer zum besagten Arm verlaufende Achse gedreht werden kann.

3. Vorrichtung (10) nach einem der Ansprüche 1 oder 2, **dadurch gekennzeichnet, dass** das Mittel zum Aufhängen (11) einen im Wesentlichen halbkreisförmigen Bahnverlauf beschreibt.

4. Vorrichtung (10) nach einem der Ansprüche 1 bis 3, **dadurch gekennzeichnet, dass** das Mittel zum Aufhängen (11) zumindest zwei Tragestangen (11a, 11 b) umfasst, die im Wesentlichen parallel verlaufen und einen Abstand zueinander aufweisen, um den Beutel offen zu halten.

5. Vorrichtung (10) nach Anspruch 4, **dadurch gekennzeichnet, dass** sich die Tragestangen (11a, 11 b) in eine Richtung erstrecken, die im Wesentlichen quer zum Bahnverlauf des Mittels zum Aufhängen (11) verläuft.

6. Vorrichtung (10) nach einem der Ansprüche 1 bis 5, **dadurch gekennzeichnet, dass** das Führungsmittel aus einer Kuppel (14) hergestellt wird, die sich im Wesentlichen am Bahnverlauf des Mittels zum Aufhängen (11) entlang erstreckt.

7. Vorrichtung (10) nach Anspruch 6, **dadurch gekennzeichnet, dass** die Kuppel (14) eine im Wesentlichen halbzylindrische Form aufweist.

8. Vorrichtung (10) nach einem der Ansprüche 1 bis 7, **dadurch gekennzeichnet, dass** der Bahnverlauf des Mittels zum Aufhängen (11) sowie jener, der vom zugeordneten Führungsmittel (14) beschrieben wird, umkehrbar sind, wobei die endgültige Position zur Grundposition eines neuen Beutels wird und umgekehrt.

9. Vorrichtung (10) nach einem der Ansprüche 1 bis 8, **dadurch gekennzeichnet, dass** sie mit einem Rakelsystem, im Speziellen mit einem oder zwei Messern (16) ausgestattet ist, die mobil montiert sind, um sich am Beutel anzulegen und den Beutel nach dem Wenden desselben der Länge nach von seiner Öffnung bis zu einem Boden des Beutels abstreifen.

10. Vorrichtung (10) nach einem der Ansprüche 1 bis 9, **dadurch gekennzeichnet, dass** das Mittel zum Aufhängen (11) zumindest teilweise mithilfe von Roboterarmen (13) bewegt wird.

## Claims

1. A device (10) for flipping a filtration bag comprising at least one means for suspending and spacing (11) the bag at an opening of the latter, **characterized in that** the suspension means is movably mounted between an initial position in which it has an upper face orientated towards the outside of the bag and a lower face orientated towards the inside of the bag, and a flipped final position in which, the upper face becomes the lower face and vice versa, said suspension means also being associated, during the passage from its initial position to its flipped position, with at least one means (14) for guiding the bag defining a path along which the bag is raised relative to the suspension means and its opening, thus causing its fall through the opening and consequently the flipping thereof, the upper surface of the suspension means orientated towards the outside of the bag becoming the lower surface orientated towards the inside of the bag.

2. The device (10) according to claim 1, **characterized in that** the suspension means (11) is movably mounted by means of at least one support arm movable in rotation about an axis substantially transverse to said arm.

3. The device (10) according to any one of claims 1 or 2, **characterized in that** the suspension means (11) describes a substantially semi-circular path.

4. The device (10) according to any one of claims 1 to 3, **characterized in that** the suspension means (11) comprises at least two suspension bars (11 a, 11 b) substantially parallel and spaced apart so as to maintain the bag open.

5. The device (10) according to claim 4, **characterized in that** the suspension bars (11 a, 11 b) extend along a direction substantially transverse to the path of the suspension means (11).

6. The device (10) according to any one of claims 1 to 5, **characterized in that** the guide means is made from a dome (14) extending substantially along the path of the suspension means (11).

7. The device (10) according to claim 6, **characterized in that** the dome (14) has a substantially hemi-cylindrical shape.

8. The device (10) according to any one of claims 1 to 7, **characterized in that** the path of the suspension means (11) and that described by the associated guide means (14) are reversible, the final position becoming the initial position of a new bag and vice versa.

9. The device (10) according to any one of claims 1 to 8, **characterized in that** it is equipped with a scraping system, in particular one or two knife/knives (16), movably mounted so as to clamp the bag and scrap the bag over the length from its opening towards a bottom of the bag, after reversing of the latter.

10. The device (10) according to any one of claims 1 to 9, **characterized in that** the suspension means (11) is displaced at least partially by means of the robotized arms (13).
